# EUROPÄISCHE PATENTSCHRIFT

(11) **EP 3 003 716 B1**
(45) Veröffentlichungstag und Bekanntmachung des Hinweises auf die Patenterteilung: **19.05.2021**
(21) Anmeldenummer: 14727386.6
(22) Anmeldetag: 26.05.2014
(51) Int. Cl.: B32B 17/10, E06B 5/16

(54) **BRANDSCHUTZVERGLASUNG UND VERFAHREN ZUR HERSTELLUNG EINER BRANDSCHUTZVERGLASUNG**
FIREPROOF GLAZING AND PROCESS FOR PREPARATION OF A FIREPROOF GLAZING
VITRAGE COUPE-FEU ET PROCEDE POUR PREPARATION D´UN VITRAGE COUPE-FEU

(30) Priorität: 29.05.2013 CH 10322013
(43) Veröffentlichungstag der Anmeldung: 13.04.2016
(60) Teilanmeldung: 16187343.5
(73) Patentinhaber: SAINT-GOBAIN GLASS FRANCE, 92400 Courbevoie (FR)
(72) Erfinder: TE STRAKE, David, 52070 Aachen (DE); GELDERIE, Udo, 52146 Würselen (DE)
(74) Vertreter: Frei Patent Attorneys
(86) Internationale Anmeldenummer: PCT/CH2014/000070
(87) Internationale Veröffentlichungsnummer: WO 2014/190444

(56) Entgegenhaltungen:
- WO-A1-03/061963
- DE-C1- 4 001 677
- US-A- 5 061 748

## Beschreibung

Die Erfindung betrifft das Gebiet der Brandschutzverglasung. Sie bezieht sich auf eine Brandschutzverglasung mit einer zwischen zwei transparenten Trägern (bspw. Glasscheiben) angeordneten transparenten Brandschutzschicht.

Bei einer Brandschutzverglasung mit zwischen transparenten Trägern (insbesondere Glasscheiben) angeordneter Brandschutzschicht zerspringt die dem Feuer zugewandte Seite des Glases und es setzt im Brandfall eine Aufschäumung und/oder Trübung der Brandschutzschicht ein. Die Brandschutzschicht wirkt dann kühlend und/oder isolierend beziehungsweise reflektierend. Diese Brandschutzschicht kann beispielsweise auf Basis von Silikaten oder auf Basis von Hydrogelen aufgebaut sein. Beide haben ihre Vor- und Nachteile.

Eine feuerhemmende Verglasung auf Basis von Hydrogelen ist beispielsweise in DE 2713849 beschrieben, bei der ein Raum zwischen wenigstens zwei parallelen Glasscheiben mit einem Gel gefüllt ist. Das Gel wird bei der Polymerisation von Methacrylamid und Acrylamid gebildet, wobei die Polymerisation mit Hilfe von Peroxyden oder Persalzen unter Zugabe eines Beschleunigungsmittels (z.B. Diethylaminopropionitril) und gegebenenfalls eines Vernetzungsmittels (z.B. Methylenbisacrylamid, MBA) erfolgt.

DE 10237395 beschreibt ein Verfahren zur Herstellung einer Brandschutzverglasung, wobei eine Brandschutzzusammensetzung zwischen zwei benachbarten Glasscheiben erzeugt wird. Die Brandschutzzusammensetzung bildet sich durch die Polymerisation von Acrylsäure und/oder Methacrylsäure und/oder deren jeweilige Alkalisalze und/oder Ammoniumsalze der Acrylsäure, dabei wird zusätzlich eine Salzlösung, ein Polymerisationsinitiators und ein Vernetzungsmittel verwendet, wobei basische Salzlösungen als bevorzugt angegeben werden. Ähnliches ist auch in WO 03/061963, DE 4001677 und US 5061748 beschrieben.

Bisher bekannte Hydrogele sind teilweise aus toxischen oder cancerogen oder mutagenen Rohstoffen aufgebaut (z.B. auf Basis von Acrylamid/DE 2713849) oder es werden Rohstoffe (wasserlösliche Monomere) verwendet, die vorzugweise im Alkalischen polymerisieren. Hohe pH-Werte können jedoch unerwünschte Reaktionen mit Glasoberflächen hervorrufen (Glaskorrosion) und damit zu Trübungen führen. Ein weiterer Nachteil der bislang verwendeten Hydrogele ist deren schlechte Haftung zur Glasoberfläche. Insbesondere durch Hydrolyse-Reaktionen durch hohe pH-Werte werden chemische Bindungen zur Glasoberfläche entweder zerstört oder kommen gar nicht erst zustande.

Es sind auch Hydrogele bekannt, die auf Basis von Methylolacrylamid hergestellt werden. Methylolacrylamid kann beispielsweise aus den Ausgangstoffen Acrylamid und Formaldehyd dargestellt werden, wobei beide Ausgangstoffe gesundheitsbedenkliche Substanzen sind. Sie wurden als SVHC (Substance of Very High Concern, besonders besorgniserregender Stoffe) eingestuft. SVHCs sind chemische Verbindungen (oder Teil einer Gruppe von chemischen Verbindungen), welche unter der REACH-Verordnung (Registration, Evaluation, Authorisation and Restriction of Chemicals) mit besonders gefährlichen Eigenschaften identifiziert worden sind. Daher wird Acrylamid auch als cancerogen und mutagen bezeichnet und Formaldehyd wird als giftig und vermutlich krebserzeugend eingestuft.

Eine Exposition von Menschen mit diesen Stoffen beispielsweise während der Produktion oder nach einem Bersten der Brandschutzglasscheibe im Brandfall ist daher schädlich und sollte vermieden werden.

Des Weiteren ist bei der Herstellung der Brandschutzverglasungen auf Basis von Hydrogelen grosse Eile geboten, sobald der Polymerisationsinitiator zu den Edukten des Gels zugegeben wird, da die Vernetzung und damit die Aushärtung des Gels sofort beginnt. Dies ist besonders nachteilig, wenn die Edukte oder ein Teil der Edukte toxisch sind, da in Hektik durchgeführte Tätigkeiten sehr viel fehleranfälliger sind.

Es ist deshalb Aufgabe der Erfindung, eine Brandschutzverglasung und ein Verfahren zu ihrer Herstellung zu schaffen, welche die oben genannten Nachteile beheben.

Diese Aufgaben lösen eine Brandschutzverglasung und ein Verfahren zur Herstellung einer Brandschutzverglasung wie in den Patentansprüchen definiert.

Die Brandschutzverglasung weist mindestens zwei transparente Träger auf, zwischen denen eine transparente Schicht aus einer Brandschutzschicht angeordnet ist. Die Brandschutzschicht weist ein Hydrogel auf. Dieses weist ein aus mindestens einem monofunktionellen Monomer sowie mindestens einem bi- oder polyfunktionellen Monomer in einer wässrigen Salzlösung oder in einer wässrigen Salzdispersion in einem sauren Milieu polymerisiertes Polymer auf. Dabei ist eine Polymerisation des Polymers aus den Monomeren thermisch aktivierbar, und die thermische Aktivierung setzt oberhalb der Raumtemperatur ein. Die monofunktionellen Monomere weisen mindestens Acrylsäure oder ein Acrylsäurederivat und Methacrylamid oder ein Derivat des Methacrylamids auf.

Als transparente Träger kommen insbesondere Glasscheiben, im Speziellen flache Glasscheiben in Frage. Auch Keramikgläser können verwendet werden und spezielle gebogene Gläser Anwendung finden. Besonders günstig können thermisch oder eventuell chemisch vorgespannte Glasscheiben sein. Als Alternativen zu Glasscheiben auf Siliziumoxidbasis kommen auch transparente Träger auf Polymerbasis (bspw. aus Polycarbonaten oder Poly-Methyl-Methacrylat (PMMA; Acrylglas), teilweise kristalline "Gläser" (Keramikgläser) oder Verbundsysteme mit Glasscheiben und Kunststoffträgern in Frage.

Der Begriff "Brandschutzverglasung" ist folglich funktionell und nicht als auf bestimmte Materialien (konkret: Glas im engeren Sinn) eingeschränkt zu verstehen sondern beinhaltet ausdrücklich auch Aufbauten mit transparenten oder transluzenten Trägern aus den vorstehend genannten und anderen Materialien.

Ein Hydrogel ist ein Wasser enthaltendes, aber wasserunlösliches (aber wasserkompatibles) Polymer, dessen Monomere zu einem dreidimensionalen Netzwerk verknüpft sind. Eine saure Lösung weist einen pH-Wert < 7 auf. Besonders bevorzugt ist das Hydrogel in einer Lösung mit einem pH-Wert von weniger als 6.5 polymerisiert, bspw. einem pH-Wert von höchstens 6 oder beispielsweise bei einem pH-Wert von höchstens 4.7.

Ein nicht toxisches Monomer ist beispielsweise eine chemische Verbindung, die gemäss dem global harmonisierten System zur Einstufung und Kennzeichnung von Chemikalien (GHS, Globally Harmonized System of Classification, Labelling and Packaging of Chemicals) der Vereinten Nationen nicht in die Gefahrenklasse "Akute Toxizität" mit der Gefahrenbezeichnung giftig (Kennbuchstabe: T) oder sehr giftig (Kennbuchstabe: T+) eingestuft wird. Ebenso sind die genannten monofunktionellen und bspw. auch bi- oder polyfunktionellen Monomere der Brandschutzschicht nicht als cancerogen (krebserzeugend) und/oder mutagen (erbgutschädigend) eingestuft.

Eine der Erfindung zugrunde liegende Erkenntnis ist, dass es möglich ist, dass die Brandschutzschicht sowohl vor der Umsetzung zu einem Hydrogel (Edukte) als auch fertig umgesetzte Hydrogel nicht toxisch ist. Das hat den Vorteil, dass auch im Brandfall die Entstehung von toxischen Verbindungen verringert ist. Dadurch ist sowohl ein Arbeiter, der bei einer Herstellung der Brandschutzschicht beteiligt ist, als auch eine Person im Brandfall oder beim Bruch der Brandschutzscheiben während der Verwendung besser vor Vergiftungen geschützt.

Des Weiteren wird es ermöglicht, dass die polymerisierte Brandschutzschicht einen pH-Wert kleiner sieben aufweist. Es wurde überraschenderweise gefunden, dass damit markante Vorteile erzielt werden können. Erstens bildet die Brandschutzschicht eine polare Oberfläche. Die Polarität der Brandschutzschicht wird durch die Polarität der Liganden in der Polymerkette beeinflusst. Diese polare Oberfläche kann mit der Oberfläche der Glasscheibe effizient wechselwirken, wodurch die Haftung der der Brandschutzschicht an der Glasscheibe stark verbessert wird. Die verbesserte Haftung kann insbesondere im Brandfall von grosser Bedeutung sein, da die Brandschutzschicht nach einem Zerspringen oder Platzen der feuerseitigen Glasscheibe mit der weiteren Glasscheibe verbunden bleibt und nicht einfach in den Brandraum fällt (was einem Totalversagen der Brandschutzverglasung entsprechen würde). Diese verbesserte Haftung wird bereits ohne die Verwendung zusätzlicher Haftvermittler erreicht.

Ein weiterer Vorteil einer Brandschutzschicht mit einen pH-Wert < 7 ist zweitens, dass im saueren Milieu die Glasscheibe, die mit der Brandschutzschicht in Berührung kommt, im Vergleich zum Stand der Technik weniger stark angegriffen wird, da eine sogenannte Glaskorrosion im Sauren weniger stark als im Alkalischen stattfindet. Dadurch wird einer alterungsbedingten Trübung des Glases/ der Glasscheibe vorgebeugt.

Als bifunktionelles Monomer kann beispielsweise Methylenbisacrylamid (MBA) verwendet werden. Das bi- oder polyfunktionelle Monomer bewirkt oder beschleunigt eine dreidimensionale Vernetzung der Brandschutzschicht. Dadurch wird es möglich, dass die Brandschutzschicht nach der Polymerisation nicht mehr fliessfähig ist. Daher wird die Formstabilität der Brandschutzschicht und damit der Brandschutzverglasung erheblich verbessert.

Das Initiieren der Polymerisation kann durch einen Initiator gefördert werden. Der Initiator kann beispielsweise ein wasserlöslicher UV-Initiator einer UV-Radikal-Ketten-Polymerisation (nach Bestrahlung mit ultravioletter Strahlung) sein.

Der Initiator (bzw. allgemein die Polymerisation) ist thermisch aktivierbar. Dadurch wird es möglich, dass nur ein Initiator für ein Initiieren der Polymerisation der Brandschutzschicht benötigt wird. Im Gegensatz dazu sind Initiatoren bekannt die als Redoxsystem wirken und mindestens zwei Reaktionspartner aufweisen. Durch die Verwendung von weniger Ausgangsstoffen/Ausgangsmaterialien (Edukten) für die Brandschutzschicht kann eine Homogenisierung der Edukte leichter erzielt werden, wodurch die Effizient der Polymerisierung und somit die Qualität der Brandschutzverglasung verbessert wird.

Die thermische Aktivierung setzt oberhalb der Raumtemperatur ein, (die Norm-Raumtemperatur ist definiert als 23°C). Dadurch wird es möglich, dass beim Homogenisieren der Edukte (inklusive des Initiators) bei Raumtemperatur noch keine Polymerisation stattfindet. Daher ist bei der sorgfältigen Herstellung der Brandschutzverglasung keine Eile geboten, was die Fehleranfälligkeit reduziert und im Produktionsprozess eine zusätzliche Flexibilität ermöglicht.

Die Brandschutzmasse, welche nach dem Polymerisieren die Brandschutzschicht bildet (d.h. das Hydrogel, eventuell mit Zusätzen) ist also bevorzugt so ausgebildet, dass bei Raumtemperatur im Wesentlichen keine Polymerisation stattfindet. "Im Wesentlichen keine Polymerisation" kann beispielsweise bedeuten, dass die Viskosität des Hydrogels innerhalb von 12 Stunden nicht einen Wert von 200 mPa s erreicht oder übersteigt. Mit anderen Worten: die Edukte der Brandschutzschicht härten nicht innerhalb einer annehmbaren Zeitdauer (ca. 12 Stunden) aus, ohne dass sie eine thermische Aktivierung erfahren.

Vorteilhafterweise liegt die Aktivierungstemperatur für das Initiieren der Polymerisation unterhalb von 100°C. Dadurch wird eine Blasenbildung in der Brandschutzschicht durch eventuell verdampfendes Wasser unterbunden. Beispielsweise kann es vorteilhaft sein, wenn die Polymerisation bei einer Temperatur von 40°C bis 75°C startet. Als Aktivierungstemperatur kann beispielsweise die tiefste Temperatur angesehen werden, bei welcher die Viskosität der frisch zusammengemischten Masse innert 1 bis zwei Stunde um einen Faktor 1000 zunimmt, dass heisst eine Viskosität von 400 mPa s erreicht. Bei einer Viskosität von 400 mPa s und mehr lässt sich die Brandschutzmasse nicht oder kaum noch verarbeiten und kann dann auch nahezu nicht mehr fliessen.

Wird für das Initiieren einer Polymerisation der Brandschutzschicht nur ein einziger Initiator verwendet, kann auf einen Reaktionspartner für den Initiator verzichtet werden. Dadurch muss man bei einer Zusammenstellung der Brandschutzschicht nicht auf ein Einstellen eines Redoxsystems achten, wobei beispielsweise ein Überschuss eines Reaktionspartners zu unerwünschten Nebenreaktionen führen kann.

Als Initiator kann ein Persalz verwendet werden, insbesondere sind Peroxidisulfate für das Initiieren der Polymerisation gut geeignet. Persalze sind die Salze einer Persäure, wobei der Begriff Persäure eine Sammelbezeichnung ist. Unter Persäure kann man sowohl Oxosäuren höheren Sauerstoffgehalts als auch Peroxosäuren (, sowie Peroxy-carbonsäuren verstehen. Persalze sind starke Oxidationsmittel die in einem Redoxsystem mit einem Reduktionsmittel die radikalische Umsetzung der Edukte des Hydrogels zu einem Polymer initiieren können. Insbesondere Peroxidisulfate sind auch thermisch aktivierbar.

Ein weiterer wesentlicher Vorteil ist, dass die Aktivierung gezielt stattfinden kann, wenn sich die Edukte der Brandschutzschicht an ihrem Bestimmungsort beispielsweise zwischen den mindestens zwei Glasscheiben befinden. Dadurch kann die Verarbeitung wie beispielsweise das Mischen und Homogenisieren der Edukte sowie das Einfüllen der Edukte zwischen die mindestens zwei Glasscheiben mit grosser Sorgfalt und ohne Hast ausgeführt werden. Daher kann die Qualität der Brandschutzverglasung reproduzierbar auf einem hohen Niveau gesichert werden.

Des Weiteren können die mindestens zwei Glasscheiben der Brandschutzverglasung an der der Brandschutzschicht zugewandten Seite eine Schicht aus organofunktionellem Silan aufweisen. Das organofunktionelle Silan kann beispielsweise durch ein Aufsprühen, eine Walzenapplikation oder durch ein Aufwischen auf die Glasscheibe aufgebracht werden.

Dadurch wird es möglich, dass die Haftung der Brandschutzschicht an der Glasscheibe noch weiter verbessert wird. Die weiter verbesserte Haftung wirkt sich vorteilhaft auf die Brandschutzeigenschaften der Brandschutzverglasung aus, da im Brandfall nach einem Abplatzen der dem Feuer zugewandten Glasscheibe die Brandschutzschicht an der mindestens einen verbleibenden Glasscheibe haften bleibt und eine Hitzedämmung bieten. Das organofunktionelle Silan kann auch als funktionalisiertes Silan bezeichnet werden.

Vorteilhafterweise ist die Schicht aus organofunktionellem Silan eine monomolekulare Schicht. Dies kann mit Hilfe einer stark verdünnten Lösung des funktionalisierten Silans in einem leicht flüchtigen Lösungsmittel, wie beispielsweise Propanol oder Isopropanol, oder ein Propanol-Wasser-Gemisch, realisiert werden. Durch die monomolekulare Schicht kann eine direkte und stabile Verbindung mit der Glasscheibe hergestellt werden, da keine Zwischenschichten, diese Verbindung beeinträchtigen.

Des Weiteren kann das organofunktionelle Silan mit der Brandschutzschicht eine kovalente Bindung eingehen. Eine solche kovalente Bindung kann im Gegensatz zu rein polaren Wechselwirkungen nur durch grossen Energieaufwand gebrochen werden. Dadurch haftet die Brandschutzschicht besonders gut an der beschichteten Glasscheibe. Bei einem Brand steht sehr viel Wärmeenergie zur Verfügung, wodurch einerseits die kovalenten Bindungen zwischen Brandschutzschicht und dem funktionalisierten Silan auf der dem Feuer zugewandten Seite gebrochen werden und sich die eventuelle abplatzende Glasscheibe von der Brandschutzschicht lösen kann. Andererseits bleiben die Bindung zwischen Brandschutzschicht und dem funktionalisierten Silan auf der dem Feuer abgewandten Seite bestehen, wodurch die Hitzedämmung der Brandschutzverglasung weiterhin aufrechterhalten wird.

Weist das organofunktionelle Silan mindestens eine Doppelbindung an der der Glasscheibe abgewandten Seite auf, kann die initiierte Polymerisation nicht nur innerhalb der Brandschutzschicht stattfinden, sondern auch auf das funktionalisierte Silan übergreifen. Durch diese Vernetzung zwischen Brandschutzschicht und funktionalisiertes Silan und damit mit der Glasscheibe haftet die Brandschutzschicht besonders gut an der Glasscheibe, was die bereits erwähnten Vorteile mit sich bringt. Ein solches funktionalisiertes Silan mit mindestens einer Doppelbindung kann beispielsweise ein Vinylsilan sein.

Die wasserlöslichen, nicht toxischen Monomere aus denen die Brandschutzschicht umgesetzt wird, weisen mindestens Acrylsäure oder ein Acrylsäurederivat und Methacrylamid oder ein Derivat des Methacrylamids auf. Dadurch kann auf die Verwendung von toxischem Acrylamid verzichtet werden und sichergestellt werden, dass wie bereits erwähnt auch das fertig umgesetzte Hydrogel nicht toxisch ist und im Brandfall die Entstehung von toxischen Stoffen stark reduziert werden kann.

Die Brandschutzschicht vor der Umsetzung kann einen Anteil von 5-20 Gewichtsprozent an Monomeren aufweisen. Dadurch kann eine gute dreidimensionale Vernetzung gewährleistet werden, wodurch die Formstabilität der Brandschutzschicht massgeblich verbessert wird. Insbesondere kann der Anteil der Monomere auch in zwischen 7 und 15 Gewichtsprozent der Brandschutzschicht vor einer Umsetzung betragen, wobei die Vernetzung besonders gut ist. Dabei ist es vorteilhaft, dass die Monomere sowohl Acrylsäure oder ein Acrylsäurederivat aufweisen als auch Methacrylamid oder ein Derivat des Methacrylamids aufweisen. Dadurch wird es möglich die dreidimensionale Vernetzung der Brandschutzschicht zu verbessern. In diesem Fall gilt also für den Anteil von Acrylsäure und/oder Acrylsäurederivat plus Methacrylamid und/oder ein Methacrylamidderivat, dass dieser zwischen 5 und 20% (Angaben jeweils in Gewichtsprozenten), bevorzugt zwischen 7 und 15%, besonders bevorzugt zwischen 8 und 12% liegt. Das Verhältnis zwischen Methacrylamid und/oder ein Methacrylamidderivat einerseits und Acrylsäure und/oder Acrylsäurederivat andererseits liegt bevorzugt zwischen 0.5 und 2.5, insbesondere zwischen 0.8 und 1.5, besonders bevorzugt zwischen 1 und 1.2. Für die Anteile weiterer Bestandteile der Brandschutzmasse gilt:
- Wasseranteil zwischen 60-90%, bevorzugt zwischen 70-85%, insbesondere zwischen 75-82%.
- Salz (bspw. NaCl oder ein anderes Alkalisalz oder Erdalkalisalz) 0-20%, bevorzugt mindestens 5%, besonders bevorzugt zwischen 5 und 15%, insbesondere zwischen 8 und 13%.
- Lauge (bspw. NaOH oder KOH oder Kaliumcarbonat etc.) bevorzugt maximal 5%, insbesondere zwischen 0 und 4%, oder zwischen 0.8 und 2.5%, bspw. zwischen 1% und 2%.
- bi- oder polyfunktionelles Monomer (zum Beispiel Methylenbisacrylamid MBA) beispielsweise maximal 1.5%, insbesondere zwischen 0% oder 0.05% und 0.5% oder zwischen 0.07% und 0.25%. Das Molverhältnis zwischen monofunktionellem Monomer(en) einerseits und bi- oder polyfunktionellem Monomer andererseits ist beispielsweise zwischen 40 und 1000, insbesondere zwischen 70 und 300.
- Initiator: bspw. maximal 1%, insbesondere zwischen 0.05% und 0.4% oder zwischen 0.07% und 0.25%.

Die Brandschutzschicht kann auch nach der Polymerisation einen pH-Wert kleiner 7 aufweisen. Dadurch wird die Haftung am Glas aufgrund von polaren Wechselwirkungen unterstützt. Für die Verbesserung der Haftung wird dabei nicht zwingend an der der Brandschutzschicht zugewandten Seite eine Schicht aus organofunktionellem Silan benötigt. Im Basischen (pH > 7) kann es zu einer Degenerierung der Bindungen zwischen der Brandschutzschicht und einer eventuell aufgetragenen Schicht aus funktionalisiertem Silan kommen, wodurch die Haftung an der Glasscheibe im Basischen reduziert wird. Ausserdem, wird im Sauren (pH < 7) wie erwähnt die sogenannte Glaskorrosion verringert, wodurch die Brandschutzverglasung eine grössere Alterungsbeständigkeit zeigt.

Das Verfahren zur Herstellung einer Brandschutzverglasung weist die folgenden Schritte auf:
- Bereitstellen einer Brandschutzmasse mit wasserlöslichen, nicht toxischen, nicht cancerogen und nicht mutagenen monofunktionellen Monomeren sowie mindestens einem bi- oder polyfunktionellem Monomer und mindestens einem Initiator in einer wässrigen Salzlösung oder in einer wässrigen Salzdispersion im sauren Milieu;
- Bereitstellen von mindestens einem ersten transparenten Träger und mindestens einer entlang der Kante des ersten Trägers umlaufenden Randbegrenzung, so, dass der erste Träger und die Randbegrenzung ein Behältnis bilden;
- Einfüllen der Brandschutzmasse in das Behältnis; und
- kontrolliertes Starten einer Polymerisation der Brandschutzmasse zu einer Hydrogel-Brandschutzschicht, wobei das kontrollierte Starten der Polymerisation durch ein Erwärmen der Brandschutzmasse auf eine Temperatur oberhalb der Raumtemperatur initialisiert wird, und/oder
- wobei in der Brandschutzmasse enthaltene, bei der Polymerisation zu einem Polymer polymerisierende Monomere mindestens Acrylsäure oder ein Acrylsäurederivat und Methacrylamid oder ein Derivat des Methacrylamids aufweisen.

Das Behältnis kann gemäss einer ersten Möglichkeit durch den ersten transparenten Träger und zusätzlich einen zweiten transparenten Träger (bspw. ebenfalls eine Glasscheibe) mit einer umlaufenden Randabdichtung gebildet werden, wobei die Randabdichtung an mindestens einer Stelle unterbrochen ist um eine Einfüllöffnung zu bilden. Nach dem Einfüllen wird dann die Randabdichtung so ergänzt, dass die Einfüllöffnung verschlossen wird. Dieses Verfahren hat den Vorteil, dass auch während der Herstellung platzsparende Anordnungen von mehreren Brandschutzverglasungen möglich sind. Ein mögliches Beispiel eines solchen Einfüllschrittes wird (für eine andere Brandschutzmasse als im erfindungsgemässen Verfahren) beispielsweise in WO 03/031173 gelehrt.

Es ist auch nicht ganz ausgeschlossen, dass gemäss einer weiteren Ausführungsform der erste transparente Träger (Glasscheibe oder ähnlich) mit einer umlaufenden Randbegrenzung horizontal abgelegt werden kann, so dass das Behältnis in der Art einer Wanne durch Träger und Randbegrenzung gebildet und befüllt wird. Die Brandschutzmasse kann anschliessend ausgehärtet und gegebenenfalls dabei auch getrocknet werden, woraufhin ein zweiter transparenter Träger darauf gelegt und bei Bedarf eine Randabdichtung angebracht wird (die Randabdichtung kann auch mindestens teilweise durch die Randbegrenzung gebildet werden, die dann auf dem ersten Träger verbleibt). Es ist auch ein Anbringen des zweiten Trägers vor oder während des Aushärtens möglich. Dieses Verfahren kann bspw. unter Schutzgas ausgeführt werden, damit kein Luftsauerstoff die Polymerisation behindern kann.

Durch dieses Vorgehen wird es möglich, dass das die Polymerisation erst dann kontrolliert gestartet werden kann, wenn die Edukte der Brandschutzschicht homogenisiert und an Ort und Stelle in Kontakt mindestens mit dem ersten Träger sind. Dadurch können die Arbeitsschritte beim Herstellen der Brandschutzverglasung mit grosser Sorgfalt ausgeführt werden, wodurch die Reproduzierbarkeit der Qualität gesichert werden kann.

Das kontrollierte Starten der Polymerisation wird durch ein Erwärmen der Brandschutzschicht initialisiert. Dadurch wird eine homogene Polymerisation der Brandschutzschicht beispielsweise im Raum zwischen den mindestens zwei Glasscheiben gewährleistet. Dabei darf die Temperatur, wie bereits erwähnt, nicht zu hoch gewählt werden, damit eine Blasenbildung in der Brandschutzschicht verhindert wird.

Ein möglicher zusätzlicher Schritt betrifft Ausführungsformen, in denen der Träger als Glasscheibe (vorgespanntes oder nicht vorgespanntes oder laminiertes Glas) ausgebildet ist. Gemäss diesem Schritt kann, bevor die entsprechende Glasscheibe in Kontakt mit der Brandschutzmasse kommt, auf die Glasscheibe bzw. mindestens eine der Glasscheiben an der der Brandschutzschicht zugewandten Seite eine Schicht aus organofunktionellem Silan aufgetragen werden. Dadurch kann die Haftung der Brandschutzschicht an der Glasscheibe verstärkt werden, wodurch die Brandschutzeigenschaften der Brandschutzverglasung verbessert werden.

Das Vorgehen gemäss der Erfindung lässt sich selbstverständlich nicht nur auf Brandschutzverglasungen mit zwei transparenten Trägern und einer Brandschutzschicht dazwischen, sondern auf jegliche Aufbauten mit transparenten Trägern und Brandschutzschicht anwenden, insbesondere auch Aufbauten mit mehr als zwei Trägern und mehr als einer Brandschutzschicht.

Weitere Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:

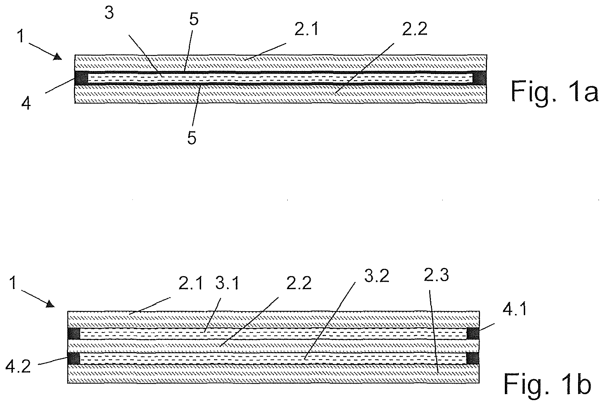

Figuren 1a und 1b verschiedene Aufbauten einer Brandschutzverglasung;
Grundsätzlich sind in den Figuren gleiche oder analoge Teile mit gleichen Bezugszeichen versehen.

Die Figuren la und lb zeigen schematischen den Aufbau einer Brandschutzverglasung 1 welche eine Brandschutzschicht 3 auf der Basis eines Hydrogels aufweist. Die Figuren zeigen:
- Figur 1a eine Brandschutzverglasung 1 mit zwei Glasscheiben 2.1, 2.2 mit dazwischen angeordneter Brandschutzschicht 3 mit Randabdichtung 4; die Brandschutzverglasung kann bspw. durch Aushärten der Edukte der Brandschutzschicht 3 hergestellt werden, welche zunächst flüssig in den mit Hilfe der Randabdichtung 4 (Randverbund) definierten Zwischenraum zwischen die Glasscheiben 2.1, 2.2 und eingefüllt und dort thermisch ausgehärtet werden. Die Glasscheiben 2.1, 2.2 weisen an der der Brandschutzschicht 3 zugewandten Seite eine Schicht aus organofunktionellem Silan 5 auf. Diese Schicht aus organofunktionellem Silan 5 kann alternativ auch nur auf einer der beiden Glasscheiben aufgetragen sein.
- Figur 1b eine Brandschutzverglasung 1 mit drei Glasscheiben 2.1, 2.2, 2.3 mit dazwischen angeordneten Brandschutzschichten 3.1, 3.2, hier jeweils mit Randabdichtung 4.1, 4.2; auch Brandschutzverglasungen 1 mit mehr als drei Glasscheiben 2.1, 2.2, 2.3 und mehr als zwei Brandschutzschichten 3.1, 3.2 sind möglich.

Auch Aufbauten mit mehr als drei Glasscheiben, mehr als zwei Brandschutzschichten und/oder mit anderen transparenten Trägern als Glasscheiben und/oder mit zusätzlichen transparenten Schichten - wie bspw. in DE 20 2012 012 285.1 beschrieben - sind möglich.

Nachfolgend sind einige Beispiele für die Herstellung einer Brandschutzverglasung 1 wiedergegeben.

### Beispiel 1

Eine Brandschutzmasse wird aus folgenden Komponenten gemischt:

| | |
|---|---|
| 5,42 w[%] | Methacrylamid |
| 4,58 w[%] | Acrylsäure |
| 0,17 w[%] | Methylenbisacrylamid (MBA) |
| 10,00 w[%] | NaCl |
| 1,50 w[%] | NaOH |
| 78,16 w[%] | Wasser |
| 0,17 w[%] | Initiator (Peroxidsulfat) |

### Beispiel 2

Zunächst werden die Edukte der Brandschutzschicht 3 zu einer Brandschutzmasse mit den folgenden Gewichtsprozenten gemischt:

| | |
|---|---|
| 5,4 w[%] | Methacrylamid |
| 4,6 w[%] | Acrylsäure |
| 0,15 w[%] | Methylenbisacrylamid (MBA) |
| 2,5 w[%] | KCl |
| 0,1 w[%] | NaOH |
| 87,1 w[%] | Wasser |
| 0,15 w[%] | Initiator (Peroxidsulfat) |

Der pH-Wert dieser sauren Mischung beträgt circa 4.5. Anschliessend wird die Mischung in den Raum, der durch die Randabdichtung zwischen zwei Glasscheiben abgrenzt ist, eingefüllt. Während einer Zeit von 400 Minuten in einem Ofen bei 60°C wird eine Polymerisation initiiert, und die Brandschutzschicht härtet zwischen den beiden Glasscheiben aus.

### Beispiel Silanisierung

2 g Vinylsilan (Vinyltriethoxysilan) werden in 100 ml eines 1/1 Wasser/Propanol Gemischs gelöst. Die Lösung wird auf zwei ausgehärtete Glasscheiben gesprüht. Nach einer Trockenzeit von 5 Minuten wird eine erste Glasscheibe mit einer zweiten Glasscheibe über eine Randabdichtung verbunden (Randverbund). In dem so entstandenen Hohlraum wird die in Beispiel 1 aufgeführte Mischung der Edukte der Brandschutzschicht 3 eingefüllt.

Der mit der Brandschutzschicht gefüllte Verbund wird bei 55°C für 500 Minuten in einem Ofen erwärmt. Die Polymerisation der Edukte des Hydrogels wird durch das Erwärmen initiiert und die Brandschutzschicht härtet im Scheibenzwischenraum aus.

## Patentansprüche

1. **Brandschutzverglasung** mit mindestens zwei transparenten Trägern, zwischen denen eine transparente Brandschutzschicht angeordnet ist, wobei die Brandschutzschicht ein Hydrogel aufweist, und wobei das Hydrogel ein aus mindestens einem monofunktionellem Monomer sowie mindestens einem bi- oder polyfunktionellem Monomer in einer wässrigen Salzlösung oder in einer wässrigen Salzdispersion in einem sauren Milieu polymerisiertes Polymer aufweist, wobei eine Polymerisation des Polymers aus den Monomeren thermisch aktivierbar ist und die thermische Aktivierung oberhalb der Raumtemperatur einsetzt und wobei die monofunktionellen Monomere mindestens Acrylsäure oder ein Acrylsäurederivat und Methacrylamid oder ein Derivat des Methacrylamids aufweisen.

2. Brandschutzverglasung nach Anspruch 1, wobei bei einer Polymerisation des Polymers zusätzlich ein Initiator vorhanden ist, insbesondere wobei der Initiator ein Persalz, insbesondere ein Peroxidisulfat, aufweist.

3. Brandschutzverglasung gemäss einem der vorherigen Ansprüche, wobei eine Aktivierungstemperatur für das Initiieren der Polymerisation unterhalb von 80°C liegt.

4. Brandschutzverglasung gemäss Anspruch 3, wobei die Aktivierungstemperatur in einem Bereich von 25°C bis 80°C, insbesondere in einem Bereich von 40°C bis 75°C, liegt.

5. Brandschutzverglasung nach einem der vorangehenden Ansprüche, wobei die Monomere nicht toxisch, nicht cancerogen und nicht mutagen sind.

6. Brandschutzverglasung nach einem der vorangehenden Ansprüche, wobei die Aktivierung des Initiators stattfindet, wenn sich die Brandschutzschicht zwischen den mindestens zwei Glasscheiben befindet.

7. Brandschutzverglasung nach einem der vorangehenden Ansprüche, wobei die mindestens zwei Glasscheiben an der der Brandschutzschicht zugewandten Seite eine Schicht aus organofunktionellem Silan aufweisen.

8. Brandschutzverglasung gemäss Anspruch 7, wobei die Schicht aus organofunktionellem Silan eine monomolekulare Schicht ist.

9. Brandschutzverglasung nach einem der Ansprüche 7-8, wobei das organofunktionelle Silan mit der Brandschutzschicht eine kovalente Bindung eingeht.

10. Brandschutzverglasung nach einem der Ansprüche 7-9, wobei das organofunktionelle Silan mindestens eine Doppelbindung an der der Glasscheibe abgewandten Seite aufweist, wobei das organofunktionelle Silan insbesondere ein Vinylsilan ist.

11. Brandschutzverglasung gemäss einem der vorherigen Ansprüche, wobei die monofunktionellen Monomere einen Anteil von 5-20 Gewichtsprozent, insbesondere einen Anteil von 7-15 Gewichtsprozent, an den Edukten der Brandschutzschicht aufweisen.

12. Brandschutzverglasung nach einem der vorherigen Ansprüche, wobei die polymerisiert Brandschutzschicht einen pH-Wert kleiner 7 aufweist.

13. Verfahren zur Herstellung einer Brandschutzverglasung aufweisend die Schritte
- Bereitstellen einer Brandschutzmasse mit wasserlöslichen, nicht toxischen, nicht cancerogen und nicht mutagenen monofunktionellen Monomeren sowie mindestens einem bi- oder polyfunktionellem Monomer und mindestens einem Initiator in einer wässrigen Salzlösung oder in einer wässrigen Salzdispersion im sauren Milieu;
- Bereitstellen von mindestens einem ersten transparenten Träger und mindestens einer entlang der Kante des ersten Trägers umlaufenden Randbegrenzung, so, dass der erste Träger und die Randbegrenzung ein Behältnis bilden;
- Einfüllen der Brandschutzmasse in das Behältnis; und
- kontrolliertes Starten einer Polymerisation der Brandschutzmasse zu einer Hydrogel-Brandschutzschicht, wobei das kontrollierte Starten der Polymerisation durch ein Erwärmen der Brandschutzmasse auf eine Temperatur oberhalb der Raumtemperatur initialisiert wird, und/oder
- wobei in der Brandschutzmasse enthaltene, bei der Polymerisation zu einem Polymer polymerisierende Monomere mindestens Acrylsäure oder ein Acrylsäurederivat und Methacrylamid oder ein Derivat des Methacrylamids aufweisen.

14. Verfahren gemäss Anspruch 13, wobei der erste transparente Träger zusammen mit mindestens einem zweiten, vom ersten Träger beabstandeten zweiten transparenten Träger bereitgestellt wird, wobei die Randbegrenzung eine zwischen der ersten und zweiten Glasscheibe entlang deren Kante umlaufende Randabdichtung ist und die Brandschutzmasse vor einem Polymerisieren in einen Raum zwischen dem ersten und zweiten Träger gebildeten, das Behältnis bildenden Raum eingefüllt wird.

15. Verfahren nach einem der Ansprüche 13-14, wobei der erste Träger oder mindestens einer der Träger als Glasscheibe ausgebildet ist, und wobei in einem zusätzlichen Schritt auf die mindestens eine Glasscheibe an einer der Brandschutzschicht zugewandten Seite eine Schicht aus organofunktionellem Silan aufgetragen wird, bevor die Glasscheibe mit der Brandschutzmasse in Kontakt gebracht wird.

## Claims

1. A **fire-protection glazing** with at least two transparent carriers, between which a transparent fire-protection layer is arranged, wherein the fire-protection layer comprises a hydrogel, and wherein the hydrogel comprises a polymer which is polymerised from at least one monofunctional monomer as well as at least one bifunctional or polyfunctional monomer in an aqueous salt solution or in an aqueous salt dispersion, in an acid environment,
wherein a polymerisation of the polymer from the monomers can be thermally activated and the thermal activation sets in above room temperature; and
wherein the monofunctional monomers comprise at least acrylic acid or an acrylic acid derivative and methacrylamide or a derivative of methacrylamide.

2. Fire-protection glazing according to claim 1, **characterised in that** an initiator is additionally present with a polymerisation of the polymer, in particular wherein the initiator is a persalt, in particular a peroxide sulphate.

3. Fire-protection glazing according to one preceding claims, wherein an activation temperature for the initiation of the polymerisation lies below 80°C.

4. Fire-protection glazing according to claim 3, wherein the activation temperature lies in a region of 25°C to 80°C, in particular in a region of 40°C to 75°C.

5. Fire-protection glazing according to one of the preceding claims, wherein the monomers are not toxic, not carcinogenic and not mutagenic.

6. Fire-protection glazing according to one of the preceding claims, wherein the activation of the initiator takes place when the fire-protection layer is located between the at least two glass panes.

7. Fire-protection glazing according to one of the preceding claims, wherein the at least two glass panes comprise a layer of organofunctional silane on the side which faces the fire-protection layer.

8. Fire-protection glazing according to claim 7, wherein the layer of organofunctional silane is a monomolecular layer.

9. Fire-protection glazing according to one of the claims 7-8, wherein the organofunctional silane is covalently bound to the fire-protection layer.

10. Fire-protection glazing according to one of the claims 7-9, wherein the organofunctional silane comprises at least one double bond on the side which is away from the glass pane, wherein the organofunctional silane in particular is a vinyl silane.

11. Fire-protection glazing according to one of the preceding claims, wherein the monofunctional monomers have a share of 5-20 percent by weight, and in particular a share of 7-15 percent by weight, of the educts of the fire-protection layer.

12. Fire-protection glazing according to one of the preceding claims, wherein the polymerised fire-protection layer has a pH value of smaller than 7.

13. A method for manufacturing a fire-protection glazing comprising the steps
- providing a fire-protection mass with water-soluble, non-toxic, non-carcinogenic and non-mutagenic monofunctional monomers as well as with at least one bifunctional or polyfunctional monomer and with at least one initiator, in an aqueous salt solution or in an aqueous salt dispersion, in an acid environment;
- providing at least one first transparent carrier and at least one edge limitation which is peripheral along the edge of the first carrier, so that the first carrier and the edge limitation form a receptacle;
- filling the fire-protection mass into the receptacle; and
- controlled starting of a polymerisation of the fire-protection into a hydrogel fire-protection layer;
wherein the controlled staring of the polymerisation is initiated by a heating of the fire-protection mass to a temperature above room temperature and/or
wherein monomers which are contained in the fire-protection mass and which polymerise into a polymer on polymerisation, comprises at least acrylic acid or an acrylic acid derivative and methacylamide or a derivative of methacrylamide.

14. Method according to claim 13, wherein the first transparent carrier together with at least one second transparent carrier which is distanced to the first carrier is provided, wherein the edge delimitation is an edge sealing between the first and the second glass pane and which is peripheral along their edge, and the fire-protection mass before a polymerisation is filled into a space which is formed between the first and the second carrier and which forms the receptacle.

15. Method according to one of the claims 13-14, wherein the first carrier or at least one of the carriers is designed as a glass pane, and wherein in an additional step, a layer of organofunctional silane is deposited onto at least one glass pane on a side which faces the fire-protection layer, before the glass pane is brought into contact with the fire-protection mass.

## Revendications

1. Vitrage de protection contre le feu présentant au moins deux supports transparents entre lesquels est disposée une couche de protection contre le feu, la couche de protection contre le feu présentant un hydrogel et l'hydrogel présentant un polymère formé d'au moins un monomère monofonctionnel ainsi que d'au moins un monomère bi ou polyfonctionnel polymérisant en solution saline ou dans une dispersion saline dans un milieu acide, la polymérisation du polymère à partir des monomères pouvant être activée thermiquement et l'activation thermique utilisée ayant lieu au-dessus de la température ambiante, les monomères monofonctionnels présentant au moins l'acide acrylique ou un dérivé d'acide acrylique et le méthacrylamide ou un dérivé de méthacrylamide.

2. Vitrage de protection contre le feu selon la revendication 1, dans lequel un initiateur est en outre prévu pour la polymérisation du polymère, l'initiateur étant en particulier un sel peroxydé et notamment un peroxydisulfate.

3. Vitrage de protection contre le feu selon l'une des revendications précédentes, dans lequel la température d'activation de l'initiation de la polymérisation est inférieure à 80°C.

4. Vitrage de protection contre le feu selon l'une des revendications précédentes, dans lequel la température d'activation est située dans la plage de 25°C à 80°C et en particulier dans la plage de 40°C à 75°C.

5. Vitrage de protection contre le feu selon l'une des revendications précédentes, dans lequel les monomères sont non toxiques, non cancérigènes et non mutagènes.

6. Vitrage de protection contre le feu selon l'une des revendications précédentes, dans lequel l'activation de l'initiateur a lieu lorsque la couche de protection contre le feu se trouve entre deux feuilles de verre.

7. Vitrage de protection contre le feu selon l'une des revendications précédentes, dans lequel sur leur face adjacente à la couche de protection contre le feu, les deux ou plusieurs feuilles de verre présentent une couche en silane organofonctionnel.

8. Vitrage de protection contre le feu selon la revendication 8, dans lequel la couche de silane organofonctionnel est une couche monomoléculaire.

9. Vitrage de protection contre le feu selon l'une des revendications 7 et 8, dans lequel le silane organofonctionnel forme une liaison covalente avec la couche de protection contre le feu.

10. Vitrage de protection contre le feu selon l'une des revendications 7 à 9, dans lequel le silane organofonctionnel présente au moins une double liaison avec la face non tournée vers la feuille de verre, le silane organofonctionnel étant en particulier un vinylsilane.

11. Vitrage de protection contre le feu selon l'une des revendications précédentes, dans lequel les monomères monofonctionnels présentent une teneur de 5 à 20 pour cent en poids et en particulier une teneur de 7 à 15 pour cent en poids de précurseurs de la couche de protection contre le feu.

12. Vitrage de protection contre le feu selon l'une des revendications précédentes, dans lequel la valeur du pH de la couche de protection contre le feu polymérisée est inférieure à 7.

13. Procédé de fabrication d'un vitrage de protection contre le feu, le procédé présentant les étapes qui consistent à :
- préparer une pâte de protection contre le feu formée de monomères solubles dans l'eau, non toxiques, non cancérigènes et non mutagènes ainsi que d'au moins un monomère bi ou polyfonctionnels et d'au moins un initiateur, en solution saline ou dans une dispersion saline dans un milieu acide,
- préparer au moins un premier support transparent et au moins une frontière de bord entourant le bord du premier support de telle sorte que le premier support et la frontière de bord forment un récipient,
- remplir le récipient de la pâte de protection contre le feu et
- amorcer de manière contrôlée la polymérisation de la pâte de protection contre le feu en une couche d'hydrogel de protection contre le feu, l'amorçage contrôlé de la polymérisation étant réalisé par chauffage de la pâte de protection contre le feu à une température plus élevée que la température ambiante,
- les monomères que contient la pâte de protection contre le feu et polymérisant en un polymère lors de la polymérisation présentant au moins l'acide acrylique ou un dérivé d'acide acrylique et le méthacrylamide ou un dérivé de méthacrylamide.

14. Procédé selon la revendication 13, dans lequel le premier support transparent est disposé à distance d'un deuxième support transparent, la frontière de bord est une étanchéité de bord disposée entre la première et la deuxième feuille de verre le long de leur bord périphérique et l'espace intérieur du récipient formé entre le premier et le deuxième support est rempli par la pâte de protection contre le feu avant sa polymérisation.

15. Procédé selon l'une des revendications 13 et 14, dans lequel le premier support ou au moins un support sont configurés comme feuille de verre et dans une étape supplémentaire qui précède la mise en contact de la feuille de verre avec la pâte de protection contre le feu, une couche de silane organofonctionnel est appliquée sur la face de la feuille de verre tournée vers la couche de protection contre le feu.
